# EUROPEAN PATENT APPLICATION

(11) **EP 4 440 225 A1**
(43) Date of publication of application: **02.10.2024**
(21) Application number: 24164521.7
(22) Date of filing: 19.03.2024
(51) Int. Cl.: H04W 72/40, H04W 76/23, H04W 36/06, H04W 84/12, H04W 76/14

(54) **METHOD FOR PERFORMING CHANNEL MANAGEMENT IN WIRELESS COMMUNICATION SYSTEM, AND ASSOCIATED APPARATUS**

(30) Priority: 31.03.2023 US 202363493337 P; 14.03.2024 US 202418604512
(71) Applicant: MEDIATEK INC., Hsin-Chu 300 (TW)
(72) Inventor: HSIEH, Kai-Hsiang, 30078 Hsinchu City (TW); CHEN, Wei-Xun, 30078 Hsinchu City (TW)
(74) Representative: Hoefer & Partner Patentanwälte mbB

(57) **Abstract**

A method for performing channel management in a wireless communication system and associated apparatus are provided. The method may include: receiving, by the first wireless transceiver device, a channel switch request in a first communication frame from the second wireless transceiver device (S12); and triggering a channel switch, CS, mechanism, by the first wireless transceiver device, to inform the second wireless transceiver device to switch from a first channel to a target channel, for subsequent communication of the second wireless transceiver device (S13).

## Description

### Cross Reference to Related Applications

This application claims the benefit of U.S. Provisional Application No. 63/493,337, filed on March 31st, 2023. The content of the application is incorporated herein by reference.

### Background

The present invention is related to communication control, and more particularly, to a method and apparatus for performing channel management in a wireless communication system.

From a few years ago, Wi-Fi Direct technology defined by Wi-Fi Alliance has been widely implemented. The Wi-Fi Direct protocol defines a peer to peer (P2P) communication group, where the P2P group is a 1-to-n topology including one group owner (GO) and one or more group clients (GC). Furthermore, a P2P protocol supports concurrent operation of connecting to a P2P group and a Wi-Fi access point (AP).

However, some problems such as noise, reduced system performance, etc. may occur. For example, the system performance may be reduced when a concurrency condition (e.g., the condition with two Wi-Fi interfaces working at the same time) is met. In some examples, the system performance may become worse due to noise or multi-channel concurrency (MCC) overhead. It seems that no proper suggestion has been proposed in the related art. Thus, a novel method and associated architecture are needed for solving the problems without introducing any side effect or in a way that is less likely to introduce a side effect.

### Summary

It is an objective of the present invention to provide a method for performing channel management in a wireless communication system, and associated apparatus such as an AP device, a station (STA) device, a GO device and a GC device, in order to solve the above-mentioned problems.

A method and wireless transceiver devices according to the invention are defined in the independent claims. The dependent claims define preferred embodiments thereof. At least one embodiment of the present invention provides a method for performing channel management in a wireless communication system, where the wireless communication system may comprise a first wireless transceiver device and a second wireless transceiver device. The method may comprise: receiving, by the first wireless transceiver device, a channel switch request in a first communication frame from the second wireless transceiver device; and triggering a channel switch (CS) mechanism, by the first wireless transceiver device, to inform the second wireless transceiver device to switch from a first channel to a target channel, for subsequent communication of the second wireless transceiver device. More particularly, a same device (e.g., any device among the first wireless transceiver device and of the second wireless transceiver device) may have P2P communication capabilities corresponding to two or more P2P communication groups, and may act as a GO or a GC in any P2P communication group among the two or more P2P communication groups, and therefore may act as any of a GO and a GC in one P2P communication group while acting as any of a GO and a GC in another P2P communication group. In addition, the first wireless transceiver device and the second wireless transceiver device may be in a first P2P communication group, such as a P2P communication group in which the first wireless transceiver device is acting as a GO and the second wireless transceiver device is acting as a GC, where the GO may trigger the CS mechanism in response to the channel switch request from the GC. For example, in a GC plus GO (GC + GO) case regarding the second wireless transceiver device, the second wireless transceiver device and a third wireless transceiver device may be in a second P2P communication group, such as a P2P communication group in which the second wireless transceiver device is acting as a GO and the third wireless transceiver device acting as a GC, where the second wireless transceiver device may be arranged to trigger CS mechanism, in order to inform the third wireless transceiver device to switch to a second target channel for communication between the second wireless transceiver device and the third wireless transceiver device. For another example, in a GC plus GC (GC + GC) case regarding the second wireless transceiver device, the second wireless transceiver device and a fourth wireless transceiver device may be in a third P2P communication group, such as a P2P communication group in which the second wireless transceiver device is acting as a GC and the fourth wireless transceiver device is acting as a GO, where the third P2P communication group may coexist with the first P2P communication group. For yet another example, in a GO plus GO (GO + GO) case regarding the first wireless transceiver device, the first wireless transceiver device and a fifth wireless transceiver device may be in a fourth P2P communication group, such as a P2P communication group in which the first wireless transceiver device is acting as a GO and the fifth wireless transceiver device is acting as a GC, where the fourth P2P communication group may coexist with the first P2P communication group. Preferably, the first wireless transceiver device is an AP device, and the second wireless transceiver device is a non-access-point (non-AP) STA device.

At least one embodiment of the present invention provides a wireless transceiver device for performing channel management in a wireless communication system, where the wireless transceiver device may be one of multiple devices within the wireless communication system. The wireless transceiver device may comprise a processing circuit that is arranged to control operations of the wireless transceiver device. The wireless transceiver device may further comprise at least one communication control circuit that is coupled to the processing circuit and arranged to perform communication control, where the aforementioned at least one communication control circuit is arranged to perform wireless communication operations with another device among the multiple devices for the wireless transceiver device. For example, the wireless transceiver device is arranged to receive a channel switch request in a first communication frame from the other device; and the wireless transceiver device is arranged to trigger a CS mechanism, to inform the other device to switch from a first channel to a target channel, for subsequent communication of the other device. Preferably, the wireless transceiver device is an AP device, and the other device is a non-AP STA device.

At least one embodiment of the present invention provides a wireless transceiver device for performing channel management in a wireless communication system, where the wireless transceiver device may be one of multiple devices within the wireless communication system. The wireless transceiver device may comprise a processing circuit that is arranged to control operations of the wireless transceiver device. The wireless transceiver device may further comprise at least one communication control circuit that is coupled to the processing circuit and arranged to perform communication control, where the aforementioned at least one communication control circuit is arranged to perform wireless communication operations with another device among the multiple devices for the wireless transceiver device. For example, the wireless transceiver device is arranged to send a channel switch request in a first communication frame to the other device, to make the other device trigger a CS mechanism to inform the wireless transceiver device to switch from a first channel to a target channel, for subsequent communication of the wireless transceiver device. Preferably, the other device is an AP device, and the wireless transceiver device is a non-AP STA device.

It is an advantage of the present invention that, through proper design, the present invention method, as well as the associated apparatus such as the multiple wireless transceiver devices (e.g., the AP device and the non-AP STA device, or the GO device and the GC device), can adaptively use the CS mechanism such as a CS procedure in a situation where no radar is detected on the original channel such as the first channel. For example, the multiple wireless transceiver devices may switch to the new channel such as the target channel without any disconnection mechanism, in order to avoid noise or MCC problems, where a main control device (e.g., the AP device or the GO device) for controlling the wireless communication system among the multiple wireless transceiver devices may send CS information element (IE) without performing any radar detection. In addition, the present invention method, as well as the associated apparatus such as the multiple wireless transceiver devices (e.g., the AP device and the non-AP STA device, or the GO device and the GC device), can use a CS request sent from a client device (e.g., the non-AP STA device or the GC device) to the main control device (e.g., the AP device or the GO device) to make the main control device be capable of triggering the CS mechanism without performing any radar detection. Additionally, the present invention method and apparatus can solve the related art problem without introducing any side effect or in a way that is less likely to introduce a side effect.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram of a wireless communication system according to an embodiment of the present invention.
FIG. 2 is a diagram illustrating an AP and STA control scheme that is applicable to the architecture shown in FIG. 1 according to an embodiment of the present invention.
FIG. 3 is a diagram illustrating a GO and GC control scheme that is applicable to the architecture shown in FIG. 1 according to an embodiment of the present invention.
FIG. 4 illustrates, in the right half part thereof, a first smart channel-switching control scheme of a method for performing channel management in a wireless communication system according to an embodiment of the present invention, where a first control scheme involved with the MCC condition may be illustrated in the left half part of FIG. 4 for better comprehension.
FIG. 5 illustrates, in the right half part thereof, a second smart channel-switching control scheme of the method according to an embodiment of the present invention, where a second control scheme having the noise problem may be illustrated in the left half part of FIG. 5 for better comprehension.
FIG. 6 illustrates a GC/STA-requested CS control scheme of the method according to an embodiment of the present invention.
FIG. 7 illustrates a CS detection control scheme of the method according to an embodiment of the present invention.
FIG. 8 illustrates some implementation details of the CS detection control scheme shown in FIG. 7 according to an embodiment of the present invention.
FIG. 9 illustrates, in the right half part thereof, the first smart channel-switching control scheme of the method according to another embodiment of the present invention, where a third control scheme involved with the MCC condition may be illustrated in the left half part of FIG. 9 for better comprehension.
FIG. 10 illustrates a working flow of the method according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

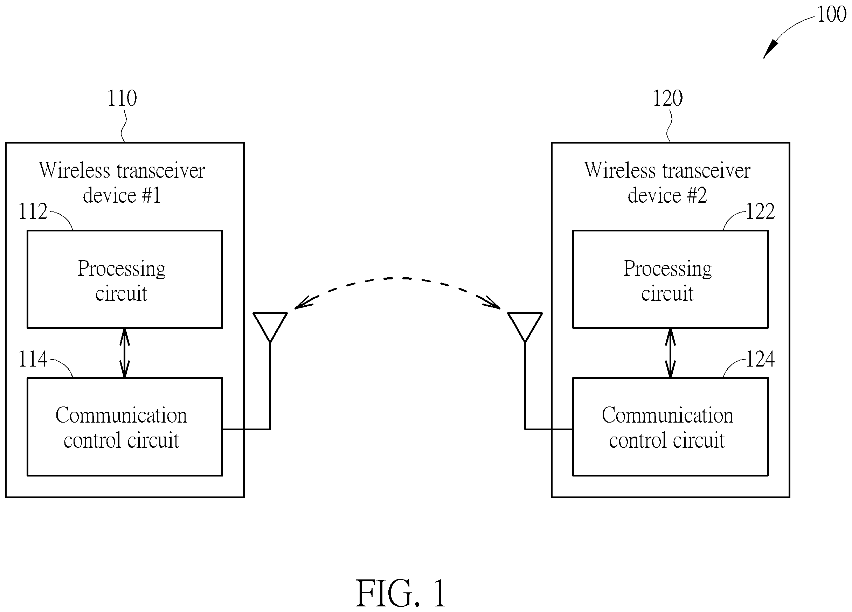

FIG. 1 is a diagram of a wireless communication system 100 according to an embodiment of the present invention. For better comprehension, the wireless communication system 100, as well as any wireless transceiver device therein, may be compatible or back-compatible to one or more versions of predetermined wireless communication standards, and more particularly, may be compatible or back-compatible to one or more versions of the Institute of Electrical and Electronics Engineers (IEEE) 802.11 standards, but the present invention is not limited thereto. Assuming that "N" may represent a positive integer that is greater than one, the wireless communication system 100 may comprise multiple wireless transceiver devices #1, ... and #N. As shown in FIG. 1, the multiple wireless transceiver devices within the wireless communication system 100 may comprise the wireless transceiver device 110 such as a main control device for controlling the wireless communication system 100 among the multiple wireless transceiver devices #1, ... and #N of the wireless communication system 100 (labeled "Wireless transceiver device #1" for brevity), and further comprise a wireless transceiver device 120 such as any other wireless transceiver device (e.g., a client device) among the multiple wireless transceiver devices #1, ... and #N (labeled "Wireless transceiver device #2" for brevity), where the wireless transceiver device 110 may comprise a processing circuit 112, at least one communication control circuit (e.g., one or more communication control circuits), which may be collectively referred to as the communication control circuit 114, and at least one antenna (e.g., one or more antennas) of the communication control circuit 114, and the wireless transceiver device 120 may comprise a processing circuit 122, at least one communication control circuit (e.g., one or more communication control circuits), which may be collectively referred to as the communication control circuit 124, and at least one antenna (e.g., one or more antennas) of the communication control circuit 124.

In the architecture shown in FIG. 1, the processing circuit 112 can be arranged to control operations of the wireless transceiver device 110 to make the wireless transceiver device 110 act as the main control device in the wireless communication system 100, and the communication control circuit 114 can be arranged to perform communication control, and more particularly, perform wireless communication operations with the wireless transceiver device 120 (or the communication control circuit 124 thereof) for the wireless transceiver device 110. In addition, the processing circuit 122 can be arranged to control operations of the wireless transceiver device 120 to make the wireless transceiver device 120 act as the client device in the wireless communication system 100, and the communication control circuit 124 can be arranged to perform communication control, and more particularly, perform wireless communication operations with the wireless transceiver device 110 (or the communication control circuit 114 thereof) for the wireless transceiver device 120.

Preferably, the processing circuit 112 can be implemented by way of at least one processor/microprocessor, at least one random access memory (RAM), at least one bus, etc., and the communication control circuit 114 can be implemented by way of at least one wireless network control circuit and at least one wired network control circuit, but the present invention is not limited thereto. Examples of the wireless transceiver device 110 may include, but are not limited to: a Wi-Fi router. In addition, the processing circuit 122 can be implemented by way of at least one processor/microprocessor, at least one RAM, at least one bus, etc., and the communication control circuit 124 can be implemented by way of at least one wireless network control circuit, but the present invention is not limited thereto. Examples of the wireless transceiver device 120 may include, but are not limited to: a multifunctional mobile phone, a laptop computer, an all-in-one computer and a wearable device.

In the wireless communication system 100, the IEEE 802.11 standards may be taken as an example of the predetermined wireless communication standards, but the present invention is not limited thereto. The wireless communication system 100 as well as the aforementioned any wireless transceiver device among the multiple wireless transceiver devices #1, ... and #N therein may be compatible or backward-compatible to one or more versions of any other standards. Preferably, the network of the wireless communication system 100 and/or the multiple wireless transceiver devices #1, ... and #N may vary, and/or the one or more versions of the predetermined wireless communication standards may be replaced by one or more versions of predetermined telecommunication standards, or may be replaced by any combination of the one or more versions of the predetermined wireless communication standards and the one or more versions of the predetermined telecommunication standards. For example, the aforementioned any wireless transceiver device among the multiple wireless transceiver devices #1, ... and #N, such as the wireless transceiver devices 110 and 120, may be compatible or back-compatible to one or more versions of some other standards such as that of Worldwide Interoperability for Microwave Access (WiMAX) or other wide area network (WAN) technology. In some examples, the aforementioned any wireless transceiver device among the multiple wireless transceiver devices #1, ... and #N, such as the wireless transceiver devices 110 and 120, may be compatible or back-compatible to one or more versions of wireless local area network (WLAN)-related standards using one or more other radio access technologies.

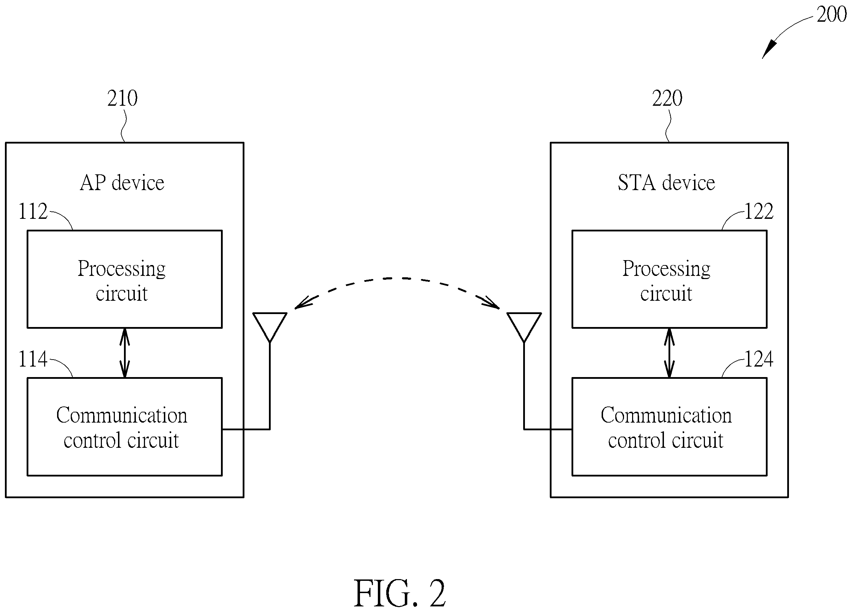

FIG. 2 is a diagram illustrating an AP and STA control scheme that is applicable to the architecture shown in FIG. 1 according to an embodiment of the present invention. For example, the wireless transceiver device 110 such as the main control device and the wireless transceiver device 120 such as the client device in the architecture shown in FIG. 1 may be implemented as an AP device 210 and a STA device 220, respectively, where the wireless communication system 100 shown in FIG. 1 may be implemented as a wireless communication system 200 such as a basic service set (BSS), but the present invention is not limited thereto. As shown in FIG. 2, the AP device 210 may comprise the processing circuit 112 and the communication control circuit 114, and the STA device 220 may comprise the processing circuit 122 and the communication control circuit 124. For example, the processing circuit 112 can be arranged to control operations of the AP device 210 to make the AP device 210 act as at least one AP in the wireless communication system 200, such as multiple APs integrated into the AP device 210, and the communication control circuit 114 can be arranged to perform the associated communication control, and more particularly, perform wireless communication operations with the STA device 220 (or the communication control circuit 124 thereof) for the AP device 210. In addition, the processing circuit 122 can be arranged to control operations of the STA device 220 to make the STA device 220 act as at least one STA in the wireless communication system 200, such as multiple STAs integrated into the STA device 220, and the communication control circuit 124 can be arranged to perform the associated communication control, and more particularly, perform wireless communication operations with the AP device 210 (or the communication control circuit 114 thereof) for the STA device 220.

As shown in FIG. 2, the multiple wireless transceiver devices #1, ... and #N within the wireless communication system 200 may comprise the AP device 210 and the STA device 220. This is for illustrative purposes only, and is not meant to be a limitation of the present invention. Preferably, the multiple wireless transceiver devices #1, ... and #N within the wireless communication system 200 may be implemented by way of multiple multi-link devices (MLDs).

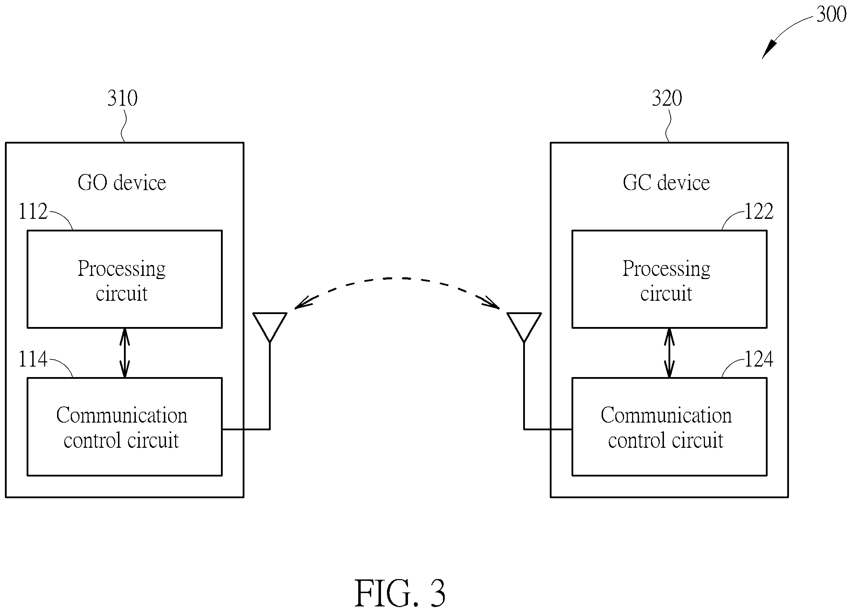

FIG. 3 is a diagram illustrating a GO and GC control scheme that is applicable to the architecture shown in FIG. 1 according to an embodiment of the present invention. For example, the wireless transceiver device 110 such as the main control device and the wireless transceiver device 120 such as the client device in the architecture shown in FIG. 1 may be implemented as a GO device 310 and a GC device 320, respectively, where the wireless communication system 100 shown in FIG. 1 may be implemented as a wireless communication system 300. As shown in FIG. 3, the GO device 310 may comprise the processing circuit 112 and the communication control circuit 114, and the GC device 320 may comprise the processing circuit 122 and the communication control circuit 124. For example, the processing circuit 112 can be arranged to control operations of the GO device 310 to make the GO device 310 act as the GO in the wireless communication system 300, and the communication control circuit 114 can be arranged to perform the associated communication control, and more particularly, perform wireless communication operations with the GC device 320 (or the communication control circuit 124 thereof) for the GO device 310. In addition, the processing circuit 122 can be arranged to control operations of the GC device 320 to make the GC device 320 act as the GC in the wireless communication system 300, and the communication control circuit 124 can be arranged to perform the associated communication control, and more particularly, perform wireless communication operations with the GO device 310 (or the communication control circuit 114 thereof) for the GC device 320.

Preferably, the wireless communication system 300 may be implemented as an independent basic service set (IBSS), but the present invention is not limited thereto.

Preferably, a method for performing channel management in a wireless communication system is applicable to the architecture shown in any figure among FIG. 1, FIG. 2 and FIG. 3. The multiple wireless transceiver devices #1, ... and #N (e.g., the wireless transceiver devices 110 and 120 in the wireless communication system 100, such as the AP device 210 and the STA device 220 or the GO device 310 and the GC device 320) may operate according to the method to enhance overall performance, and the associated operations may comprise:
(1) the wireless transceiver device #1 (e.g., the wireless transceiver device 110) may receive a channel switch request in a first communication frame from the wireless transceiver device #2; and
(2) the wireless transceiver device #1 (e.g., the wireless transceiver device 110) may trigger a channel switch (CS) mechanism to inform the wireless transceiver device #2 (e.g., the wireless transceiver device 120) to switch from a first channel to a target channel, for subsequent communication of the wireless transceiver device #2;
where the wireless transceiver devices #1 and #2 may be in a first P2P communication group, such as a P2P communication group GRP _P2P(1, 2) in which the wireless transceiver device #1 is acting as a GO and the wireless transceiver device #2 is acting as a GC, and therefore the GO may trigger the CS mechanism regarding the P2P communication group GRP _P2P(1, 2) in response to the channel switch request from the GC, but the present invention is not limited thereto. For example, after triggering the CS mechanism regarding the P2P communication group GRP _P2P(1, 2), the wireless transceiver device #1 may send a management frame in the target channel to the wireless transceiver device #2, and decide whether to switch to the target channel according to whether an acknowledgement from the wireless transceiver device #2 is received. More particularly, during the deciding step (or the operation of deciding whether to switch to the target channel according to whether the acknowledgement from the wireless transceiver device #2 is received), the wireless transceiver device #1 may decide to switch to the target channel when the acknowledgement from the wireless transceiver device #2 is received, and may decide not to switch to the target channel when no acknowledgement from the wireless transceiver device #2 is received. For the latter case among these two cases, after deciding not to switch to the target channel when no acknowledgement from the wireless transceiver device #2 is received in the target channel, the wireless transceiver device #1 may switch back to the first channel, send another management frame in the first channel to the wireless transceiver device #2, and when no acknowledgement is received, trigger another CS mechanism regarding the P2P communication group GRP _P2P(1, 2). In addition, triggering any CS mechanism (e.g., the CS mechanisms mentioned above) regarding any P2P communication group in the wireless communication system (e.g., the wireless communication system 100 shown in FIG. 1) may be performed by sending a channel switch announcement defined in IEEE 802.11 protocol, or other channel switch protocols pre-defined in the wireless communication system. For example, the aforementioned any P2P communication group may represent a P2P communication group GRP_P2P(n1, n2) in which the wireless transceiver device #n1 is acting as a GO and the wireless transceiver device #n2 is acting as a GC, where "n1" and "n2" may be different integers in the interval [1, N].

For better comprehension, a same device such as any device among the multiple wireless transceiver devices #1, ... and #N may have P2P communication capabilities corresponding to two or more P2P communication groups {GRP_P2P} (e.g., the P2P communication group GRP_P2P(n1, n2)), and may act as a GO or a GC in any P2P communication group GRP_P2P among the two or more P2P communication groups {GRP_P2P}, and therefore may act as any of a GO and a GC in one P2P communication group GRP_P2P among the two or more P2P communication groups {GRP_P2P} while acting as any of a GO and a GC in another P2P communication group GRP_P2P among the two or more P2P communication groups {GRP _P2P}. For example, in a GC plus GO (GC + GO) case regarding the wireless transceiver device #2, the wireless transceiver device #2 and a wireless transceiver device #3 may be in a second P2P communication group, such as a P2P communication group GRP _P2P(2, 3) in which the wireless transceiver device #2 is acting as a GO and the wireless transceiver device #3 acting as a GC, where the second P2P communication group such as the P2P communication group GRP _P2P(2, 3) may coexist with the first P2P communication group such as the P2P communication group GRP _P2P(1, 2), and the wireless transceiver device #2 may be arranged to trigger CS mechanism regarding the second P2P communication group (e.g., the P2P communication group GRP _P2P(2, 3)), in order to inform the wireless transceiver device #3 to switch to a second target channel for communication between the wireless transceiver devices #2 and #3. For another example, in a GC plus GC (GC + GC) case regarding the wireless transceiver device #2, the wireless transceiver device #2 and a fourth wireless transceiver device #4 may be in a third P2P communication group, such as a P2P communication group GRP _P2P(4, 2) in which the wireless transceiver device #2 is acting as a GC and the wireless transceiver device #4 is acting as a GO, where the third P2P communication group such as the P2P communication group GRP _P2P(4, 2) may coexist with the first P2P communication group such as the P2P communication group GRP _P2P(1, 2). For yet another example, in a GO plus GO (GO + GO) case regarding the wireless transceiver device #1, the wireless transceiver device #1 and a wireless transceiver device #5 may be in a fourth P2P communication group, such as a P2P communication group GRP _P2P(1, 5) in which the wireless transceiver device #1 is acting as a GO and the wireless transceiver device #5 is acting as a GC, where the fourth P2P communication group such as the P2P communication group GRP _P2P(1, 5) may coexist with the first P2P communication group such as the P2P communication group GRP _P2P(1, 2).

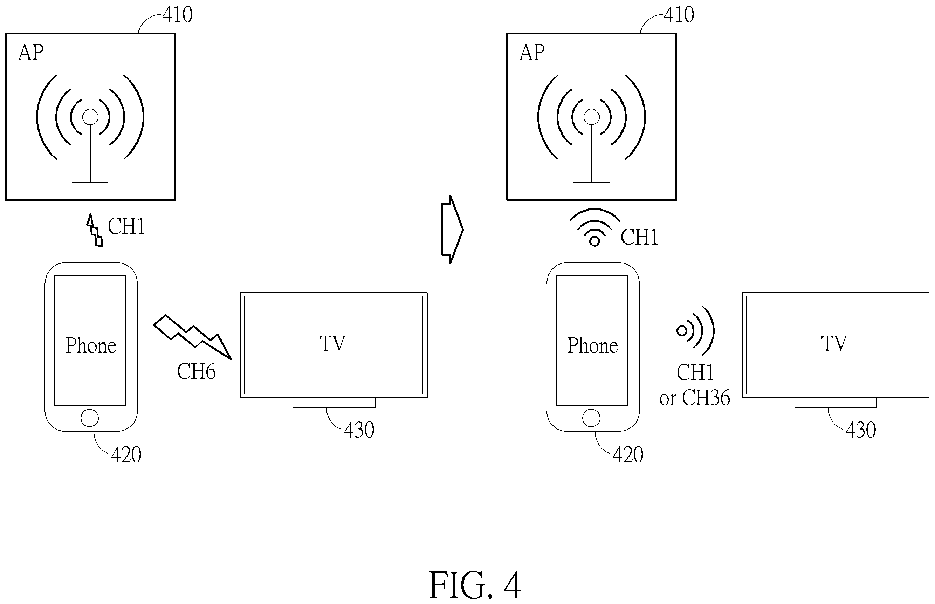

FIG. 4 illustrates, in the right half part thereof, a first smart channel-switching control scheme of the method for performing channel management in the wireless communication system (e.g., the wireless communication system 100 shown in FIG. 1) according to an embodiment of the present invention, where a first control scheme involved with the MCC condition may be illustrated in the left half part of FIG. 4 for better comprehension. In the whole system shown in any of the left half part and the right half part of FIG. 4, a first sub-system comprising an AP device 410 and a multifunctional mobile phone 420 (respectively labeled "AP" and "Phone" for brevity) may be taken as an example of the wireless communication system 100 such as the wireless communication system 200, and the AP device 410 and the multifunctional mobile phone 420 may be taken as examples of the wireless transceiver devices 110 and 120 such as the AP device 210 and the STA device 220, respectively, but the present invention is not limited thereto. In addition, in the whole system shown in any of the left half part and the right half part of FIG. 4, a second sub-system comprising the multifunctional mobile phone 420 and a smart television 430 (labeled "TV" for brevity) may be taken as an example of the wireless communication system 100 such as the wireless communication system 300, and the multifunctional mobile phone 420 and the smart television 430 may be taken as examples of the wireless transceiver devices 110 and 120 such as the GO device 310 and the GC device 320, respectively, but the present invention is not limited thereto. Preferably, the smart television 430 and the multifunctional mobile phone 420 may be taken as examples of the wireless transceiver devices 110 and 120 such as the GO device 310 and the GC device 320, respectively.

As shown in the left half part of FIG. 4, when the first control scheme is applied to this system, the MCC configuration may cause the associated MCC overhead. For example, the multifunctional mobile phone 420 may need to switch between communicating with the AP device 410 via a first wireless connection on the channel CH1 and communicating with the smart television 430 via a second wireless connection on the channel CH6, where the channels CH1 and CH6 may represent the channels #1 and #6 in the 2.4 gigahertz (GHz) radio frequency band, respectively, but the present invention is not limited thereto. Preferably, the channels (e.g., the channels CH1 and CH6) involved with the first control scheme may vary. In addition, when the system is operating according to the first control scheme, the channel switching time is typically needed, and pausing a not working channel (or a channel that is not working) such as one of the channels CH1 and CH6 is also needed, and therefore the overall performance may be reduced.

As shown in the right half part of FIG. 4, when the first smart channel-switching control scheme is applied to this system, the GC device 320 such as the smart television 430 may send at least one CS request to the GO device 310 such as the multifunctional mobile phone 420, for requesting the GO device 310 such as the multifunctional mobile phone 420 to trigger a CS mechanism such as a CS procedure. For example, the GC device 320 such as the smart television 430 may use the CS mechanism under control of the GO device 310 such as the multifunctional mobile phone 420 to jump to a new channel such as the channel CH1, in order to work on the same channel CH1, but the present invention is not limited thereto. For another example, the GC device 320 such as the smart television 430 may use the CS mechanism under control of the GO device 310 such as the multifunctional mobile phone 420 to jump to the new channel such as a different band channel, and this different band channel may be the channel CH36 in a different radio frequency band (e.g., a radio frequency band that is different from the radio frequency band in which the channel CH1 is located), where the channels CH1 and CH36 may represent the channel #1 in the 2.4 GHz radio frequency band and the channel #36 in the 5 GHz radio frequency band, but the present invention is not limited thereto. Preferably, the channels (e.g., the channels CH1 and CH36) involved with the first smart channel-switching control scheme may vary.

Based on the first smart channel-switching control scheme, the multiple wireless transceiver devices #1, ... and #N (e.g., the GO device 310 and the GC device 320) in the wireless communication system 100, such as the multifunctional mobile phone 420 and the smart television 430 shown in the right half part of FIG. 4, can perform channel relocation to avoid the MCC condition, and more particularly, use the CS mechanism to make two interfaces work in a dual band dual concurrent (DBDC) mode or a single channel concurrency (SCC) mode, in order to enhance the overall performance. For example, in the DBDC mode, the multifunctional mobile phone 420 may use one interface among the two interfaces thereof to communicate with the AP device 410 via the first wireless connection on the channel CH1, and use the other interface among the two interfaces thereof to communicate with the smart television 430 via the second wireless connection on the channel CH36. For another example, in the SCC mode, the multifunctional mobile phone 420 may use one interface among the two interfaces thereof to communicate with the AP device 410 via the first wireless connection on the channel CH1, and use the other interface among the two interfaces thereof to communicate with the smart television 430 via the second wireless connection on the channel CH1. No matter whether the two interfaces work in the DBDC mode or the SCC mode, the overall performance can be enhanced.

Preferably, when the first smart channel-switching control scheme is applied to this system, the GO device 310 such as the multifunctional mobile phone 420 may directly trigger the CS mechanism such as the CS procedure, having no need to receive the aforementioned at least one CS request from the GC device 320 such as the smart television 430 first.

Regarding the behaviors of the GO and the GC, the GO may trigger the CS to change the channel CH among multiple channels {CH} at will, while the GC may need to use the CS request (e.g., the CS request carried by the private protocol packets conforming to the pre-defined channel switch protocols) to notify the GO first, for the GO to use the CS mechanism to switch to SCC or DBDC. In addition, the associated communication operations may vary depending on different configurations. For example, the multifunctional mobile phone 420 may use one interface among the two interfaces thereof to communicate with the AP device 410 via the first wireless connection on the channel CH1, and use the other interface among the two interfaces thereof to communicate with the smart television 430 via the second wireless connection on the channel CH36. For another example, the multifunctional mobile phone 420 may use one interface among the two interfaces thereof to communicate with the AP device 410 via the first wireless connection on the channel CH1, and use the other interface among the two interfaces thereof to communicate with the smart television 430 via the second wireless connection on the channel CH1. For brevity, similar descriptions for these embodiments are not repeated in detail here.

According to another embodiment, the first sub-system comprising the AP device 410 and the multifunctional mobile phone 420 may be taken as an example of the wireless communication system 100 such as the wireless communication system 300, and the AP device 410 and the multifunctional mobile phone 420 may be taken as examples of the wireless transceiver devices 110 and 120 such as the GO device 310 and the GC device 320, respectively. For better comprehension, the channel CH1 used by the first wireless connection between the AP device 410 and the multifunctional mobile phone 420 and the channel CH6 used by the second wireless connection between the multifunctional mobile phone 420 and the smart television 430 as shown in the left half part of FIG. 4 may be replaced with the channel CH6 and the channel CH1, respectively, and therefore may be re-labeled "CH6" and "CH1" in the left half part of FIG. 4, respectively. In this situation, when the first control scheme is applied to this system, the MCC configuration may cause the associated MCC overhead. For example, the multifunctional mobile phone 420 may need to switch between communicating with the AP device 410 via the first wireless connection on the channel CH6 and communicating with the smart television 430 via the second wireless connection on the channel CH1, where the channels CH6 and CH1 may represent the channels #6 and #1 in the 2.4 GHz radio frequency band, respectively, but the present invention is not limited thereto. Preferably, the channels (e.g., the channels CH6 and CH1) involved with the first control scheme may vary. In addition, when the system is operating according to the first control scheme, the channel switching time is typically needed, and pausing the not working channel (or the channel that is not working) such as one of the channels CH6 and CH1 is also needed, and therefore the overall performance may be reduced.

Assuming that the channel CH1 used by the first wireless connection between the AP device 410 and the multifunctional mobile phone 420 and the channels CH1 or CH36 used by the second wireless connection between the multifunctional mobile phone 420 and the smart television 430 as shown in the right half part of FIG. 4 may be replaced with the channels CH1 or CH36 and the channel CH1, respectively, and therefore may be re-labeled "CH1 or CH36" and "CH1" in the right half part of FIG. 4, respectively. In this situation, when the first smart channel-switching control scheme is applied to this system, the STA device 220 such as the multifunctional mobile phone 420 may send at least one CS request to the AP device 210 such as the AP device 410, for requesting the AP device 210 such as the AP device 410 to trigger the CS mechanism such as the CS procedure. For example, the STA device 220 such as the multifunctional mobile phone 420 may use the CS mechanism under control of the AP device 210 such as the AP device 410 to jump to the new channel such as the channel CH1, in order to work on the same channel CH1, but the present invention is not limited thereto. For another example, the STA device 220 such as the multifunctional mobile phone 420 may use the CS mechanism under control of the AP device 210 such as the AP device 410 to jump to the new channel such as a different band channel, and this different band channel may be the channel CH36 in a different radio frequency band (e.g., a radio frequency band that is different from the radio frequency band in which the channel CH1 is located), where the channels CH1 and CH36 may represent the channel #1 in the 2.4 GHz radio frequency band and the channel #6 in the 5 GHz radio frequency band, but the present invention is not limited thereto. Preferably, the channels (e.g., the channels CH1 and CH36) involved with the first smart channel-switching control scheme may vary.

Based on the first smart channel-switching control scheme, the multiple wireless transceiver devices #1, ... and #N (e.g., the AP device 210 and the STA device 220) in the wireless communication system 100, such as the AP device 410 and the multifunctional mobile phone 420, can perform channel relocation to avoid the MCC condition, and more particularly, use the CS to make two interfaces work in the DBDC mode or the SCC mode, in order to enhance the overall performance. For example, in the DBDC mode, the multifunctional mobile phone 420 may use one interface among the two interfaces thereof to communicate with the AP device 410 via the first wireless connection on the channel CH36, and use the other interface among the two interfaces thereof to communicate with the smart television 430 via the second wireless connection on the channel CH1. For another example, in the SCC mode, the multifunctional mobile phone 420 may use one interface among the two interfaces thereof to communicate with the AP device 410 via the first wireless connection on the channel CH1, and use the other interface among the two interfaces thereof to communicate with the smart television 430 via the second wireless connection on the channel CH1. No matter whether the two interfaces work in the DBDC mode or the SCC mode, the overall performance can be enhanced. For brevity, similar descriptions for this embodiment are not repeated in detail here.

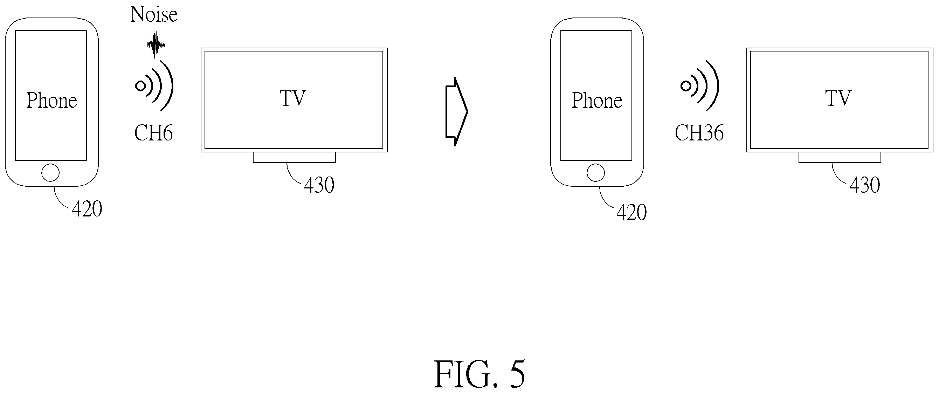

FIG. 5 illustrates, in the right half part thereof, a second smart channel-switching control scheme of the method according to an embodiment of the present invention, where a second control scheme having the noise problem may be illustrated in the left half part of FIG. 5 for better comprehension. In the whole system shown in any of the left half part and the right half part of FIG. 5, the second sub-system comprising the multifunctional mobile phone 420 and the smart television 430 (respectively labeled "Phone" and "TV" for brevity) may be taken as an example of the wireless communication system 100 such as the wireless communication system 300, and the multifunctional mobile phone 420 and the smart television 430 may be taken as examples of the wireless transceiver devices 110 and 120 such as the GO device 310 and the GC device 320, respectively, but the present invention is not limited thereto. Preferably, the smart television 430 and the multifunctional mobile phone 420 may be taken as examples of the wireless transceiver devices 110 and 120 such as the GO device 310 and the GC device 320, respectively.

As shown in the left half part of FIG. 5, when the second control scheme is applied to this system, the environment noise may cause the associated disconnection and connection/re-connection overhead. For example, the multifunctional mobile phone 420 and/or the smart television 430 may need to trigger disconnecting and connecting on a new channel, and more particularly, disconnect to give up the second wireless connection on the channel CH6, perform channel scanning to determine a channel to be the new channel, and perform handshaking operations in order to connecting on the new channel, where the channel CH6 may represent the channel #6 in the 2.4 GHz radio frequency band, but the present invention is not limited thereto. Preferably, the channel (e.g., the channel CH6) involved with the second control scheme and/or the associated operations regarding disconnecting and connecting as described above may vary.

As shown in the right half part of FIG. 5, when the second smart channel-switching control scheme is applied to this system, the GC device 320 such as the smart television 430 may send the aforementioned at least one CS request to the GO device 310 such as the multifunctional mobile phone 420, for requesting the GO device 310 such as the multifunctional mobile phone 420 to trigger the CS mechanism such as the CS procedure. For example, the GC device 320 such as the smart television 430 may use the CS mechanism under control of the GO device 310 such as the multifunctional mobile phone 420 to jump to the new channel such as a different band channel in order to avoid the noise interference, and this different band channel may be the channel CH36 in a different radio frequency band (e.g., a radio frequency band that is different from the radio frequency band in which the channel CH6 is located), where the channels CH6 and CH36 may represent the channel #6 in the 2.4 GHz radio frequency band and the channel #36 in the 5 GHz radio frequency band, but the present invention is not limited thereto. Preferably, the channels (e.g., the channels CH6 and CH36) involved with the second smart channel-switching control scheme may vary.

Based on the second smart channel-switching control scheme, the multiple wireless transceiver devices #1, ... and #N (e.g., the GO device 310 and the GC device 320) in the wireless communication system 100, such as the multifunctional mobile phone 420 and the smart television 430 shown in the right half part of FIG. 5, can perform channel relocation to avoid the channel noise, and more particularly, use the CS to jump a new clear channel, in order to enhance the overall performance.

Preferably, when the second smart channel-switching control scheme is applied to this system, the GO device 310 such as the multifunctional mobile phone 420 may directly trigger the CS mechanism such as the CS procedure, having no need to receive the aforementioned at least one CS request from the GC device 320 such as the smart television 430 first. For brevity, similar descriptions for these embodiments are not repeated in detail here.

Regarding the aforementioned at least one CS request, some implementation details may be further described as follows. Preferably, the wireless transceiver devices 110 and 120 in the wireless communication system 100, such as the AP device 210 and the STA device 220 (e.g., the AP device 410 and the multifunctional mobile phone 420), may use the aforementioned at least one CS request to adaptively start the CS mechanism such as the CS procedure in a situation where no radar is detected on the original channel. For example, the associated operations may comprise:
(1) the wireless transceiver device 120 among the multiple wireless transceiver devices #1, ... and #N of the wireless communication system 100 may carry the channel switch request in the first communication frame from the wireless transceiver device 120 to the wireless transceiver device 110, for indicating the target channel requested by the wireless transceiver device 120, where the wireless transceiver device 110 may be arranged to control the wireless communication system 100, and the channel switch request may be implemented by way of at least one channel-switching-related information element (IE), for example, the aforementioned at least one channel-switching-related IE may comprise one or a combination of a channel switch announcement (CSA) IE and an extended CSA (ECSA) IE as well as any other IE predefined in the wireless communication system 100;
(2) the wireless transceiver device 110 among the multiple wireless transceiver devices #1, ... and #N of the wireless communication system 100 may receive the first communication frame carrying the channel switch request from the wireless transceiver device 120, where the first communication frame sent from the wireless transceiver device 120 to the wireless transceiver device 110 may carry the aforementioned at least one CS request; and
(3) the wireless transceiver device 110 may trigger (or control) the CS mechanism to inform the wireless transceiver device 120 to switch from the first channel to the target channel, for subsequent communication of the wireless transceiver device 120, for example, in a situation where no radar is detected on the first channel;
where the wireless transceiver device 110 may be capable of performing radar detection and checking whether any radar is detected on the first channel, but the present invention is not limited thereto. The wireless transceiver device 110 that is receiving the first communication frame may be implemented as the AP device 210, and the wireless transceiver device 120 that is sending the first communication frame may be implemented as a non-AP STA device such as the STA device 220. More particularly, regarding a first wireless connection between the wireless transceiver device 120 and the wireless transceiver device 110, such as the aforementioned first wireless connection between the multifunctional mobile phone 420 and the AP device 410, the wireless transceiver device 110 (e.g., the AP device 210 such as the AP device 410) may be arranged to act as the GO device 310, and the wireless transceiver device 120 (e.g., the STA device 220 such as the multifunctional mobile phone 420) may be arranged to act as the GC device 320. For example, the first communication frame may be an action frame carrying the channel switch request. In response to receiving the first communication frame which is the action frame carrying the channel switch request, the wireless transceiver device 110 may trigger (or control) the CS mechanism to inform the wireless transceiver device 120 to switch from the first channel to the target channel, for subsequent communication of the wireless transceiver device 120.

Preferably, the wireless transceiver devices 110 and 120 may represent a first wireless transceiver device and a second wireless transceiver device such as the wireless transceiver devices #1 and #2, respectively. For example, the wireless transceiver device #1 may trigger a CS mechanism regarding the fourth P2P communication group such as the P2P communication group GRP _P2P(1, 5) to inform the wireless transceiver device #5 to switch from another first channel to another target channel, for subsequent communication of the wireless transceiver device #5. After triggering the CS mechanism regarding the P2P communication group GRP _P2P(1, 5), the wireless transceiver device #1 may send a management frame in the other target channel to the wireless transceiver device #5, and regarding the P2P communication group GRP _P2P(1, 5), decide whether to switch from the other first channel to the other target channel according to whether an acknowledgement from the wireless transceiver device #5 is received. More particularly, this deciding step (or the operation of deciding whether to switch from the other first channel to the other target channel according to whether the acknowledgement from the wireless transceiver device #5 is received) may comprise, in response to no acknowledgement from the wireless transceiver device #5 being received, the wireless transceiver device #1 decides not to switch to the other target channel, and switches back to the other first channel. After switching back to the other first channel regarding the P2P communication group GRP _P2P(1, 5), the wireless transceiver device #1 may send another management frame in the other first channel to the wireless transceiver device #5, and when no acknowledgement from the wireless transceiver device #5 is received, the wireless transceiver device #1 may trigger another CS mechanism regarding the P2P communication group GRP _P2P(1, 5). For example, the wireless transceiver device #5 may be an Internet of Things (IoT) device that does not have sufficient capabilities to support the associated operations. For brevity, similar descriptions for these embodiments are not repeated in detail here.

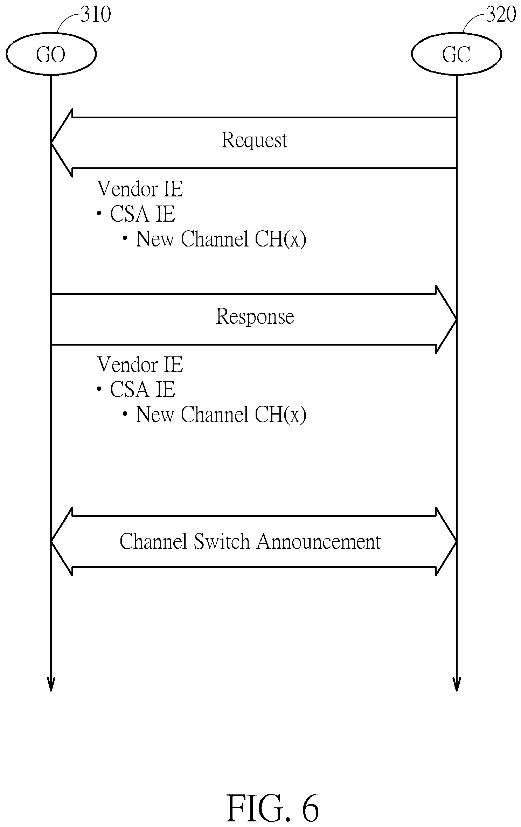

FIG. 6 illustrates a GC/STA-requested CS control scheme of the method according to an embodiment of the present invention. The wireless transceiver devices 110 and 120 in the wireless communication system 100, such as the AP device 210 and the STA device 220 (e.g., the AP device 410 and the multifunctional mobile phone 420), may operate according to the GC/STA-requested CS control scheme, where the GO device 310 and the GC device 320 (respectively labeled "GO" and "GC" for brevity) may be illustrated as shown in FIG. 6 to be examples of the wireless transceiver devices 110 and 120, respectively, but the present invention is not limited thereto. Preferably, the AP device 210 and the STA device 220 may be illustrated as replacements of the GO device 310 and the GC device 320 shown in FIG. 6, respectively, to be examples of the wireless transceiver devices 110 and 120, respectively.

The wireless transceiver device 120 (e.g., the STA device 220 or the GC device 320) may send the first communication frame carrying the aforementioned at least one CS request to the wireless transceiver device 110 (e.g., the AP device 210 or the GO device 310) to ask for performing the GC/STA-requested CS, and more particularly, to notify the wireless transceiver device 110 of the target channel requested by the wireless transceiver device 120. For example, the first communication frame may be the action frame carrying the channel switch request, and the channel switch request may be implemented by way of the aforementioned at least one channel-switching-related IE such as the CSA IE, for indicating the target channel such as the new channel CH(x), but the present invention is not limited thereto. In some examples, the aforementioned at least one channel-switching-related IE may be implemented as at least one vendor IE (e.g., vendor-specific IE or vendor-defined IE).

In response to the first communication frame such as the aforementioned at least one CS request, the wireless transceiver device 110 (e.g., the AP device 210 or the GO device 310) may trigger the CS mechanism, and more particularly, start the CS mechanism such as the CS procedure. In the CS procedure, the wireless transceiver device 110 (e.g., the AP device 210 or the GO device 310) may send a second communication frame to the wireless transceiver device 120 (e.g., the STA device 220 or the GC device 320) to be a response. For example, the second communication frame may be another action frame carrying a new-channel indication, and the new-channel indication may be implemented by way of the CSA IE, for indicating the new channel CH(x), but the present invention is not limited thereto. In some examples, the channel-switching-related IE for implementing the new-channel indication may also be at least one vendor IE (e.g., vendor-specific IE or vendor-defined IE).

As shown in FIG. 6, when receiving the first communication frame such as the aforementioned at least one CS request (labeled "Request" for brevity) and detects the aforementioned at least one channel-switching-related IE such as the CSA IE therein, the wireless transceiver device 110 (e.g., the AP device 210 or the GO device 310) may trigger the CS mechanism with the new channel CH(x), and more particularly, send the second communication frame as the response (labeled "Response" for brevity) to the wireless transceiver device 120 (e.g., the STA device 220 or the GC device 320) in the beginning of the CS procedure, in order to switch from the first channel to the target channel such as the new channel CH(x) (labeled "Channel Switch Announcement" for better comprehension). For brevity, similar descriptions for this embodiment are not repeated in detail here.

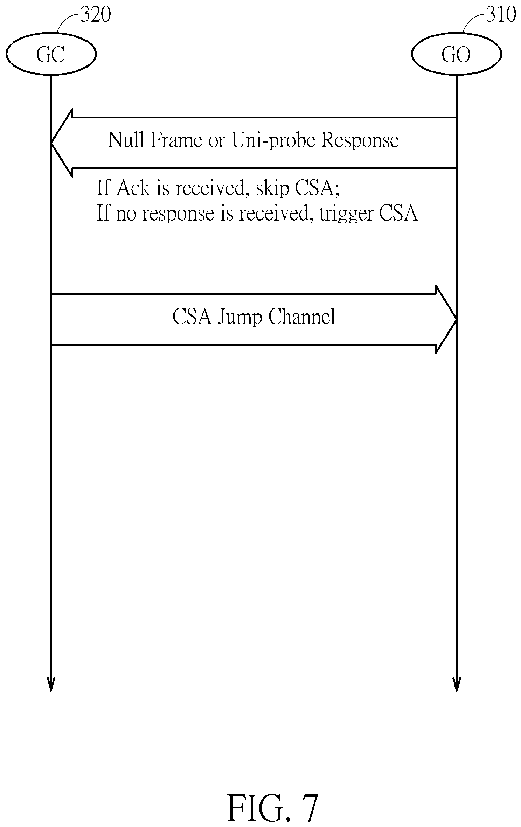

FIG. 7 illustrates a CS detection control scheme of the method according to an embodiment of the present invention. The wireless transceiver devices 110 and 120 in the wireless communication system 100, such as the AP device 210 and the STA device 220 (e.g., the AP device 410 and the multifunctional mobile phone 420), may operate according to the STA detection control scheme, where the GO device 310 and the GC device 320 (respectively labeled "GO" and "GC" for brevity) may be illustrated as shown in FIG. 7 to be examples of the wireless transceiver devices 110 and 120, respectively, but the present invention is not limited thereto. Preferably, the AP device 210 and the STA device 220 may be illustrated as replacements of the GO device 310 and the GC device 320 shown in FIG. 7, respectively, to be examples of the wireless transceiver devices 110 and 120, respectively.

When executing the CS mechanism such as the CS procedure and trying jumping to the new channel CH(x), the wireless transceiver device 110 (e.g., the AP device 210 or the GO device 310) may send at least one first detection frame (e.g., one or more null frames or one or more uni-probe responses) onto the target channel such as the new channel CH(x), for determining whether the wireless transceiver device 120 (e.g., the STA device 220 or the GC device 320) has jumped onto the target channel such as the new channel CH(x), too. For example, the associated operations may comprise:
(A1) if the one or more null frames are all sent successfully (with any announcement control process (ACP) response being received), which may indicate that the wireless transceiver device 120 is active on the target channel such as the new channel CH(x), the wireless transceiver device 110 (e.g., the AP device 210 or the GO device 310) may stay at the new channel CH(x); and
(A2) if the one or more null frames are sent unsuccessfully (without any ACP response being received), which may indicate that the wireless transceiver device 120 is inactive on the target channel such as the new channel CH(x), the wireless transceiver device 110 (e.g., the AP device 210 or the GO device 310) may jump back to the first channel such as the original channel to keep the wireless connection between the wireless transceiver devices 110 and 120;
where the channel onto which the aforementioned at least one first detection frame is sent may be implemented as the target channel such as the new channel CH(x), but the present invention is not limited thereto. Please note that the aforementioned at least one first detection frame, the channel onto which the aforementioned at least one first detection frame is sent, and/or the operations described above may vary. For example, the channel onto which the aforementioned at least one first detection frame is sent may be implemented as the first channel such as the original channel, and the associated operations may comprise:
(B 1) if any acknowledgment (Ack) sent by the wireless transceiver device 120 in response to the aforementioned at least one first detection frame is received on the first channel such as the original channel, which may indicate that the wireless transceiver device 120 is still staying on the first channel such as the original channel, the wireless transceiver device 110 (e.g., the AP device 210 or the GO device 310) may skip the CS procedure; and
(B2) if no response is received on the first channel such as the original channel, which may indicate that the wireless transceiver device 120 has jumped from the first channel such as the original channel to the target channel such as the new channel CH(x), the wireless transceiver device 110 (e.g., the AP device 210 or the GO device 310) may trigger the CS to jump to the target channel such as the new channel CH(x) (labeled "CS Jump Channel" for brevity).

Preferably, the wireless transceiver device 110 (e.g., the AP device 210 or the GO device 310) may operate according to the CS detection control scheme to perform the CS detection with the aforementioned at least one first detection frame, in order to avoid an IOT issue such as any IOT not supporting CS.

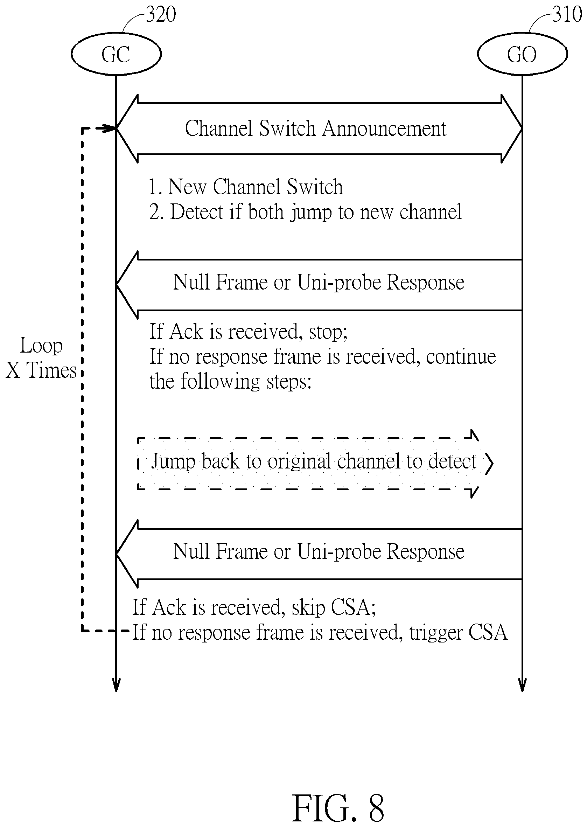

FIG. 8 illustrates some implementation details of the CS detection control scheme shown in FIG. 7 according to an embodiment of the present invention. For example, the CS procedure (labeled "Channel Switch Announcement" for brevity) may be executed in a loop X times, where "X" may represent a positive integer, and more particularly, may be equal to a predetermined number of times, but the present invention is not limited thereto. In the CS procedure, the wireless transceiver device 110 (e.g., the AP device 210 or the GO device 310) may try switching to the target channel such as the new channel CH(x) (labeled "New Channel Switch" for brevity), and may detect if both of the wireless transceiver devices 110 and 120 jump to the target channel such as the new channel CH(x) (labeled "Detect if both jump to new channel" for brevity). More particularly, the wireless transceiver device 110 (e.g., the AP device 210 or the GO device 310) may send the aforementioned at least one first detection frame (e.g., the one or more null frames or the one or more uni-probe responses) on the target channel such as the new channel CH(x), for determining whether the wireless transceiver device 120 (e.g., the STA device 220 or the GC device 320) has jumped onto the target channel such as the new channel CH(x), too. For example, the associated operations may comprise:
(A1) if any Ack is received on the target channel such as the new channel CH(x), which may indicate that the wireless transceiver device 120 is active on the target channel such as the new channel CH(x), the wireless transceiver device 110 may stop executing the loop, since the wireless transceiver device 120 has successfully jumped onto the target channel such as the new channel CH(x); and
(A2) if no response frame is received on the target channel such as the new channel CH(x), which may indicate that the wireless transceiver device 120 is inactive on the target channel such as the new channel CH(x), the wireless transceiver device 110 may continue subsequent steps in the CS procedure, and more particularly, jump back to the first channel such as the original channel to perform further detection on the first channel such as the original channel (labeled "Jump back to original channel to detect" for brevity);
where the channel onto which the aforementioned at least one first detection frame is sent may be implemented as the target channel such as the new channel CH(x), but the present invention is not limited thereto. In addition, the wireless transceiver device 110 (e.g., the AP device 210 or the GO device 310) may send one or more other detection frames (e.g., one or more null frames or one or more uni-probe responses) on the first channel such as the original channel, for determining whether the wireless transceiver device 120 (e.g., the STA device 220 or the GC device 320) has jumped onto the target channel such as the new channel CH(x) or keeps staying at the first channel such as the original channel. For example, the associated operations may comprise:
(B1) if any Ack sent by the wireless transceiver device 120 in response to the one or more other detection frames is received on the first channel such as the original channel, which may indicate that the wireless transceiver device 120 is still staying on the first channel such as the original channel, the wireless transceiver device 110 (e.g., the AP device 210 or the GO device 310) may skip the CS procedure, since the wireless transceiver device 120 cannot jump onto the target channel such as the new channel CH(x); and
(B2) if no response frame is received on the first channel such as the original channel, which may indicate that the wireless transceiver device 120 has jumped from the first channel such as the original channel to the target channel such as the new channel CH(x), the wireless transceiver device 110 (e.g., the AP device 210 or the GO device 310) may trigger the CS mechanism such as the CS procedure again, for example, by executing the loop for the next time as illustrated with the arrow depicted with dashed line;
but the present invention is not limited thereto. For brevity, similar descriptions for this embodiment are not repeated in detail here.

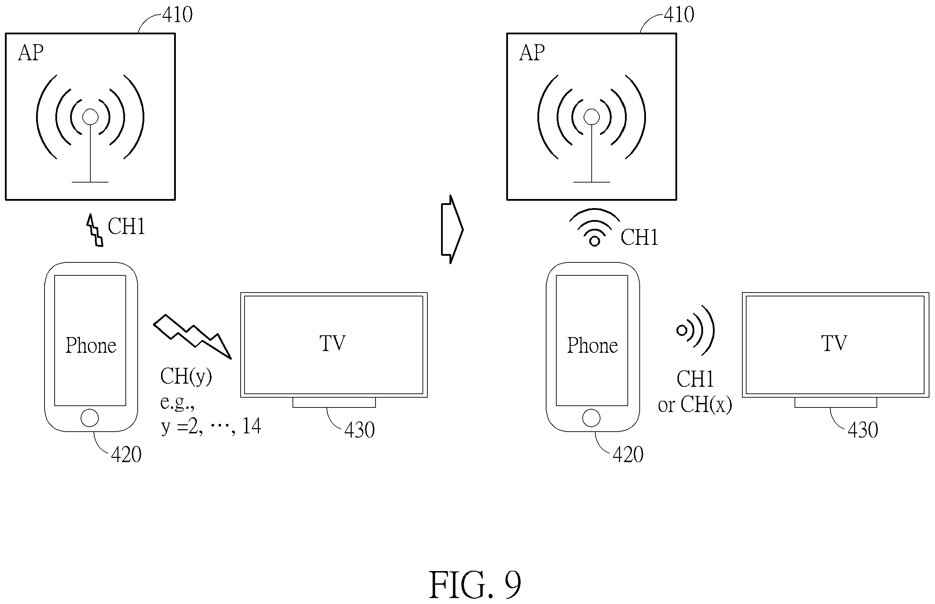

FIG. 9 illustrates, in the right half part thereof, the first smart channel-switching control scheme of the method according to another embodiment of the present invention, where a third control scheme involved with the MCC condition may be illustrated in the left half part of FIG. 9 for better comprehension. In comparison with the embodiment shown in FIG. 4, the channel CH6 used by the second wireless connection between the multifunctional mobile phone 420 and the smart television 430 as shown in the left half part of FIG. 4 may be replaced with the channel CH(y) as shown in the left half part of FIG. 9, and the channels CH1 or CH36 used by the second wireless connection between the multifunctional mobile phone 420 and the smart television 430 as shown in the right half part of FIG. 4 may be replaced with the channels CH1 or CH(x) as shown in the right half part of FIG. 9. For better comprehension, the channel CH(x) may represent the target channel requested by the wireless transceiver device 120 (e.g., the GC device 320 such as the smart television 430), and the channel CH(y) may represent the first channel. For example, "y" may represent a positive integer, for indicating that the channel CH(y) is a channel different from the channel CH1 among all channels of the same radio frequency band (e.g., the 2.4 GHz radio frequency band), and more particularly, may be any integer in the range of the interval [1, 14], but the present invention is not limited thereto. For brevity, similar descriptions for this embodiment are not repeated in detail here.

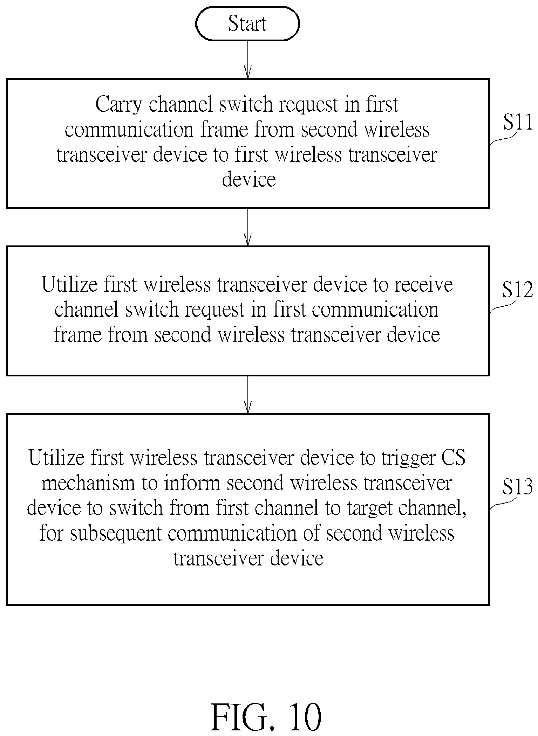

FIG. 10 illustrates a working flow of the method according to an embodiment of the present invention, where the wireless transceiver devices 110 and 120 may represent the first wireless transceiver device and the second wireless transceiver device such as the wireless transceiver devices #1 and #2, respectively. For example, the wireless transceiver devices 110 and 120 in the wireless communication system 100, such as the AP device 210 and the STA device 220 (e.g., the AP device 410 and the multifunctional mobile phone 420) or the GO device 310 and the GC device 320 (e.g., the AP device 410 and the multifunctional mobile phone 420), may operate according to the working flow shown in FIG. 10.

In Step S11, the wireless transceiver device 120 in the wireless communication system 100, such as the STA device 220 (e.g. the multifunctional mobile phone 420) or the GC device 320 (e.g., the multifunctional mobile phone 420), may carry the channel switch request in the first communication frame from the wireless transceiver device 120 to the wireless transceiver device 110, for sending the channel switch request, and more particularly, indicating the target channel requested by the wireless transceiver device 120, where the wireless transceiver device 110 may be arranged to control the wireless communication system 100.

In Step S 12, the wireless transceiver device 110 in the wireless communication system 100, such as the AP device 210 (e.g., the AP device 410) or the GO device 310 (e.g., the AP device 410), may receive the channel switch request in the first communication frame from the wireless transceiver device 120. For example, the wireless transceiver device 110 (e.g., the AP device 210 such as the AP device 410) may be capable of performing radar detection and checking whether any radar is detected on the first channel, but the present invention is not limited thereto. The wireless transceiver device 110 is not performing any radar detection and is not checking whether any radar is detected on the first channel when the operation of Step S12 is performed. More particularly, the wireless transceiver device 110 is not performing any radar detection and is not checking whether any radar is detected on the first channel when the operations of Steps S1 1-S13 in the working flow shown in FIG. 10 are performed.

In Step S13, the wireless transceiver device 110 in the wireless communication system 100, such as the AP device 210 (e.g., the AP device 410) or the GO device 310 (e.g., the AP device 410), may trigger the CS mechanism to inform the wireless transceiver device 120 to switch from the first channel to the target channel, for subsequent communication of the wireless transceiver device 120. For example, the operation of Step S13 may be performed in a situation where no radar is detected on the first channel. The wireless transceiver device 110 may start the CS mechanism such as the CS procedure in response to the first communication frame such as the aforementioned at least one CS request, rather than starting (or triggering) the CS mechanism in response to any radar being detected on the first channel. For brevity, similar descriptions for this embodiment are not repeated in detail here.

For better comprehension, the method may be illustrated with the working flow shown in FIG. 10, but the present invention is not limited thereto. Preferably, one or more steps may be added, deleted, or changed in the working flow shown in FIG. 10. For example, the channel switch request may be implemented by way of at least one first channel-switching-related IE. In the operation of Step S13, the wireless transceiver device 110 may carry at least one second channel-switching-related IE in the second communication frame from the wireless transceiver device 110 to the wireless transceiver device 120, for indicating that the new channel of the CS mechanism is equal to the target channel requested by the wireless transceiver device 120, and send the second communication frame to the wireless transceiver device 120, for informing the wireless transceiver device 120 to switch from the first channel to the target channel, in order to start switching from the first channel to the target channel, where any channel-switching-related IE among the at least one first channel-switching-related IE and the at least one second channel-switching-related IE may comprise one or a combination of a CSA IE and an ECSA IE as well as any other IE predefined in the wireless communication system 100. For brevity, similar descriptions for these embodiments are not repeated in detail here.

Preferably, the AP device 210 may be replaced with a service access point (SAP) device. For brevity, similar descriptions for these embodiments are not repeated in detail here.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for performing channel management in a wireless communication system, the wireless communication system comprising a first wireless transceiver device and a second wireless transceiver device, the method comprising:
receiving, by the first wireless transceiver device, a channel switch request in a first communication frame from the second wireless transceiver device (S12); and
triggering a channel switch, in the following also referred to as CS, mechanism, by the first wireless transceiver device, to inform the second wireless transceiver device to switch from a first channel to a target channel, for subsequent communication of the second wireless transceiver device (S13).

2. The method of claim 1, wherein the first wireless transceiver device is an access point, in the following also referred to as AP, device, and the second wireless transceiver device is a non-access-point, in the following also referred to as non-AP, station, in the following also referred to as STA, device.

3. The method of claim 1 or 2, the first wireless transceiver device and the second wireless transceiver device being in a first peer to peer, in the following also referred to as P2P, communication group, wherein the first wireless transceiver device is acting as a group owner, in the following also referred to as GO, and the second wireless transceiver device is acting as a group client, in the following also referred to as GC.

4. The method of claim 3, wherein the second wireless transceiver device and a third wireless transceiver device are in a second P2P communication group, the second wireless transceiver device is acting as a GO with the third wireless transceiver device acting as a GC, the method further comprises:
triggering CS mechanism, by the second wireless transceiver device, to inform the third wireless transceiver device to switch to a second target channel for communication between the second wireless transceiver device and the third wireless transceiver device.

5. The method of claim 3 or 4, wherein the second wireless transceiver device and a fourth wireless transceiver device are in a third P2P communication group, the second wireless transceiver device is acting as a GC with the fourth wireless transceiver device is acting as a GO, wherein the third P2P communication group coexists with the first P2P communication group.

6. The method of any one of claims 3 to 5, wherein the first wireless transceiver device and a fifth wireless transceiver device are in a fourth P2P communication group, the first wireless transceiver device is acting as a GO with the fifth wireless transceiver device acting as a GC, wherein the fourth P2P communication group coexists with the first P2P communication group.

7. The method of any one of claims 1 to 6, further comprising:
after triggering the CS mechanism, sending a management frame by the first wireless transceiver device in the target channel, to the second wireless transceiver device; and
deciding whether to switch to the target channel according to whether receiving an acknowledgement from the second wireless transceiver device.

8. The method of claim 7, wherein the deciding step comprises:
deciding to switch to the target channel when the acknowledgement is received; and/or
deciding not to switch to the target channel when no acknowledgement is received,
wherein the method, after deciding not to switch to the target channel when no acknowledgement is received in the target channel, preferably further comprises:
switching back to the first channel;
sending another management frame by the first wireless transceiver device, in the first channel, to the second wireless transceiver device; and
when no acknowledgement is received, triggering another CS mechanism.

9. The method of any one of claims 1 to 8, wherein triggering the CS mechanism is performed by sending a channel switch announcement defined in IEEE 802.11 protocol, or other channel switch protocols pre-defined in the wireless communication system; and/or
wherein triggering the CS mechanism, by the first wireless transceiver device, to inform the second wireless transceiver device to switch from the first channel to the target channel, for subsequent communication of the second wireless transceiver device further comprises:
triggering the CS mechanism, by the first wireless transceiver device, to inform the second wireless transceiver device to switch from the first channel to the target channel, for subsequent communication of the second wireless transceiver device in a situation where no radar is detected on the first channel.

10. The method of claim 6 or any one of claims 7 to 9 being directly or indirectly dependent on claim 6, further comprising:
triggering a CS mechanism regarding the fourth P2P communication group, by the first wireless transceiver device, to inform the fifth wireless transceiver device to switch from another first channel to another target channel, for subsequent communication of the fifth wireless transceiver device;
after triggering the CS mechanism regarding the fourth P2P communication group, sending a management frame by the first wireless transceiver device in the other target channel, to the fifth wireless transceiver device; and
regarding the fourth P2P communication group, deciding whether to switch from the other first channel to the other target channel according to whether an acknowledgement from the fifth wireless transceiver device is received, wherein the deciding step comprises:
in response to no acknowledgement from the fifth wireless transceiver device being received, deciding not to switch to the other target channel, and switching back to the other first channel;
and wherein the method preferably further comprises:
after switching back to the other first channel regarding the fourth P2P communication group, sending another management frame by the first wireless transceiver device, in the other first channel, to the fifth wireless transceiver device; and
when no acknowledgement from the fifth wireless transceiver device is received, triggering another CS mechanism regarding the fourth P2P communication group.

11. The method of any one of claims 1 to 10, wherein the channel switch request is implemented by way of at least one channel-switching-related information element, in the following also referred to as IE; or
wherein the channel switch request is implemented by way of at least one first channel-switching-related IE; and triggering the CS mechanism, by the first wireless transceiver device, to inform the second wireless transceiver device to switch from the first channel to the target channel, for subsequent communication of the second wireless transceiver device further comprises:
sending, by the first wireless transceiver device, a second communication frame carrying at least one second channel-switching-related IE to the second wireless transceiver device, for informing the second wireless transceiver device to switch from the first channel to the target channel.

12. A wireless transceiver device (110; 210; 310), for performing channel management in a wireless communication system, the wireless transceiver device (110; 210; 310) being one of multiple devices within the wireless communication system, the wireless transceiver device (110; 210; 310) comprising:
a processing circuit, arranged to control operations of the wireless transceiver device (110; 210; 310); and
at least one communication control circuit, coupled to the processing circuit, arranged to perform communication control, wherein the at least one communication control circuit is arranged to perform wireless communication operations with another device (120; 220; 320) among the multiple devices for the wireless transceiver device (110; 210; 310);
wherein:
the wireless transceiver device (110; 210; 310) is arranged to receive a channel switch request in a first communication frame from the other device (120; 220; 320); and
the wireless transceiver device (110; 210; 310) is arranged to trigger a channel switch, in the following also referred to as CS, mechanism, to inform the other device to switch from a first channel to a target channel, for subsequent communication of the other device (120; 220; 320).

13. The wireless transceiver device (210) of claim 12, wherein the wireless transceiver device (210) is an access point, in the following also referred to as AP, device, and the other device (220) is a non-access-point, in the following also referred to as non-AP, station, in the following also referred to as STA, device.

14. A wireless transceiver device (120; 220; 320), for performing channel management in a wireless communication system, the wireless transceiver device (120; 220; 320) being one of multiple devices within the wireless communication system, the wireless transceiver device (120; 220; 320) comprising:
a processing circuit, arranged to control operations of the wireless transceiver device (120; 220; 320); and
at least one communication control circuit, coupled to the processing circuit, arranged to perform communication control, wherein the at least one communication control circuit is arranged to perform wireless communication operations with another device (110; 210; 310) among the multiple devices for the wireless transceiver device (120; 220; 320);
wherein:
the wireless transceiver device (120; 220; 320) is arranged to send a channel switch request in a first communication frame to the other device (110; 210; 310), to make the other device (110; 210; 310) trigger a channel switch, in the following also referred to as CS, mechanism to inform the wireless transceiver device (120; 220; 320) to switch from a first channel to a target channel, for subsequent communication of the wireless transceiver device (120; 220; 320).

15. The wireless transceiver device (220) of claim 14, wherein the other device (210) is an access point, in the following also referred to as AP, device, and the wireless transceiver device (220) is a non-access-point, in the following also referred to as non-AP, station, in the following also referred to as STA, device.
